# EUROPEAN PATENT APPLICATION

(11) **EP 1 795 762 A2**
(43) Date of publication of application: **13.06.2007**
(21) Application number: 06125415.7
(22) Date of filing: 05.12.2006
(51) Int. Cl.: F04D 29/54, F02C 7/04

(54) **Flow redirector for compressor inlet**

(30) Priority: 08.12.2005 US 297749
(71) Applicant: General Electric Company, Schenectady, NY 12345 (US)
(72) Inventor: ZAUSNER, Jack Raul, Niskayuna, NY 12309 (US)
(74) Representative: Illingworth-Law, William Illingworth

(57) **Abstract**

A flow redirector (10) for channeling flow from an upstream source to a compressor has a circular inlet (20) located on its upstream end. The inlet (20) is disposed off of the main axis (55) of the compressor. The compressor is configured to receive annular shaped, axial flow from the flow redirector (10). The flow redirector (10) channels the flow from the off-axis circular inlet (20) to an annular shaped outlet (30) disposed about the axis (55) of the compressor. The flow redirector (10) has a generally symmetrical and converging cross section.

## Description

### FIELD OF THE INVENTION

The present disclosure is related to the field of compressor inlets. More specifically, it is related to an inlet to redirect the incoming flow into a compressor from sources located off of the compressor's axis.

### BACKGROUND OF THE INVENTION

In turbomachinery, compressors are used to increase the pressure within a flow of fluid, commonly by using rotating vanes to do work on the flow. The performance of a compressor can be sensitive to distortions in the flow into the compressor, such as those that can be caused by the geometry of the compressor inlet. As conditions vary during ordinary operation, non-uniform flow is often generated at the entrance to the compressor. The effects of non-uniform flow can be exacerbated by the limitations placed upon the inlet geometry because of other design requirements.

One type of geometric limitation that may be placed on the inlet is related to the equipment that may need to be connected to the compressor. For instance, in an auxiliary power unit (APU) for an aircraft, it is generally desirable to have electrical devices, such as starter motors and electrical generators, that are connected to the APU. The physical requirements and placement of these devices often effect the flow path and geometry associated with the inlet to the compressor of the APU.

Therefore, there is a continued need for improved systems and techniques for delivering flow into a compressor under a variety of operating conditions and with a variety of flow sources.

### BRIEF SUMMARY OF THE INVENTION

In one embodiment of the systems described herein, a flow redirector is provided to channel the fluid flow from an upstream source to a downstream location having an annular cross section disposed about a central axis. The upstream source is located off of the central axis. The redirector includes an inlet in flow communication with the upstream source that is coupled to the upstream source, and a transition region. The transition region is in flow communication with the inlet, and has a laterally symmetrical shape. The cross section of the transition region taken normal to the central axis is such that the area of the cross section at any given point along the central axis is smaller than the area of the cross-section at any point along the central axis upstream of that given point. The redirector also includes an outlet in flow communication with the transition region and the downstream location.

In another aspect of the systems described herein, the outlet is in flow communication with a compressor.

In yet another aspect of the systems described herein, the ratio of the circumferential momentum to the axial momentum of the flow delivered to the downstream location is less than 0.4. In other aspects, this ratio may be less than 0.2. In some aspects, this ratio may be 0.

In a further aspect, the flow redirector also includes a second upstream source, and a selector that is in flow communication with the inlet. In a first condition, the selector is in flow communication with the upstream source, and in a second condition the selector is in flow communication with the second upstream source.

### BRIEF DESCRIPTION OF THE DRAWINGS

The above mentioned and other features will now be described with reference to the drawings of an embodiment of a flow redirector. The drawings are intended to illustrate, but not to limit the invention. The drawings contain the following figures:
Figure 1 is a perspective view of an exemplary flow redirector;
Figure 2 is a side view of the flow redirector of Figure 1;
Figure 3 is a top view of the flow redirector of Figure 1;
Figure 4 is a rear view of the flow redirector of Figure 1;
Figure 5 is a cut-away side view of the flow redirector of Figure 3 taken along the section 5'-5' shown on Figure 3;
Figure 6 is a cut-away top view of the flow redirector of Figure 4 taken along the section 6'-6' shown on Figure 4; and
Figures 7A, 7B and 7C show cut-away front views of the flow redirector of Figure 2, taken along the sections A-A, B-B and C-C shown on Figure 2, respectively.

### DETAILED DESCRIPTION OF THE INVENTION

The described systems and assemblies redirect and reshape a flow of fluid from a source, such as a pipe, so that it has an annular cross section, suitable to be directed into a piece of rotating machinery, such as a compressor. In particular, the source is offset from the axis of the rotating machinery, while the final annular flow is centered upon that axis. The systems described will be discussed in the context of a system for feeding an annular flow of fluid to a compressor from an offset source of axial flow, such as might be found in a power generating system or industrial compression system. Examples of such systems include an auxiliary power unit (APU) on an aircraft, other turbine powered vehicles, and land-based compression or power generation systems.

In the descriptions that follow, the term "axial" refers broadly to a direction parallel to the axis about which the rotating components rotate. This axis runs from the front of the system to the back of the engine. The term "radial" refers broadly to a direction that is perpendicular to the axis of rotation of the rotating components and that points towards or away from the axis. A "circumferential" direction at a given point is a direction that is normal to the local radial direction and normal to the axial direction as well.

An "upstream" direction refers to the direction from which the local flow is coming, while a "downstream" direction refers to the direction in which the local flow is traveling. In the most general sense, flow through the system tends to be from front to back, so the "upstream direction" will generally refer to a forward direction, while a "downstream direction" will refer to a rearward direction. In the specific examples given, the inlet is on the upstream, front side of the system, and the outlet is on the downstream, rear side of the system.

In addition to the axial and radial directions, the systems described herein may also be described with respect to a coordinate system of three perpendicularly oriented axes that will be referred to as the "longitudinal", "lateral" and "transverse" directions. The longitudinal direction extends from front to back and is the same as the "axial" direction in all of the examples given herein. It will be understood that in other embodiments, the axes of rotation of various components may be oriented along other axes, but all examples described herein will use axes of rotation such that the longitudinal and axial directions are aligned. The lateral direction is defined as a direction normal to the axial direction that extends from one side of the system to the other. The transverse direction is normal to both the longitudinal and lateral directions and extends from the top of the system to the bottom.

As noted above, the offset input flow is fed to a rotating component such as a compressor. Compressors are devices that perform work upon a flow of fluid in order raise the pressure of the fluid. The particular use for the compressor can be as a stage in an engine, such as a gas turbine engine, or for use in production of compressed air for storage or other purposes. A compressor is commonly used to pressurize a flow of air prior to mixing it with fuel and burning the fuel in gas turbine engines. It is generally desirable that the flow entering a compressor has a relatively uniform flow field in order for the compressor to operate most effectively.

However, when the compressor is part of a system, such as an auxiliary power unit (APU), that takes its input flow from a source that is not disposed directly axially upstream of the compressor, there is a need to turn and reshape the flow entering into the compressor. However, the process of reorienting and redirecting the flow into the appropriate form for input into an annular compressor often produces flow irregularities and non-uniformities that can adversely effect the performance of the compressor and its associated engine.

Therefore, it is desirable to produce an inlet system for the compressor that can redirect a flow that is located off of the axis of the compressor into the appropriate annular input form for the compressor without introducing flow irregularities and non-uniformities. It is also desirable that such a system be compact.

Furthermore, in systems such as APUs, there are often auxiliary components that are attached to the compressor or associated rotating parts of the engine. For example, in an APU there is often a desire to produce electrical power from the rotating motion of the APU components. In order to produce such motion, a generator is connected to the rotating spool of the APU and in many cases it will be desirable to connect the generator directly to a shaft extending along the axis of the spool of the APU. To do this requires that either the input or output flow must be directed around this generator. In order to maintain an acceptable operating temperature for the generator (for example, less than 250 degrees F), and because the exhaust from such a system is hotter than the air coming in, it is more practical to extend the shaft forwards, rather than backwards, locating the generator upstream of the compressor, in the relatively cooler input flow.

In order to locate the generator in this space, the incoming flow must not only be routed from a location that is off-axis, but must be routed around the generator in such a way that the flow does not interfere with the operation of the generator. Because even the incoming flow may be hotter than the ambient environment, it is also the case that the generator should be as much out of the path of the hot incoming flow as possible.

In addition to a generator, other types of components may be disposed upon the axis of the APU upstream of the compressor. One example is an electrical motor, which can be used to initially start the rotation of the spool of the APU prior to ignition. A combination starter/generator may also be used, such a device being capable of providing energy to spin up the APU spool prior to ignition of the APU, and then being switched into a mode where it generates power based upon the energy provided by the rotation of the APU spool.

In general, the flow redirector is configured to provide space for a generator, starter, or other mechanical device that is a few inches in diameter and is located close to the compressor face. A close axial spacing is advantageous for rotordynamic reasons. It is also desirable to provide sufficient access on all sides of the mechanical device to access it for installation and maintenance, and to provide room for mounting hardware to support and structurally anchor the device.

While such systems for starting APUs and generating power off of the APU have been used in the art for some time, most of these make use of systems that are connected to the rotating spool of the APU in some radially attached manner. Although such radial location of components such as the starter or generator may accomplish the general goal of allowing the system to operate with minimal interference in the incoming flow path to the compressor, they introduce additional weight and mechanical complexity to the system, which can be disadvantageous.

Therefore, a system that provides a way to route an off-axis source into an axially flowing annular input to a compressor, while allowing the flow to pass safely around a component, such as a generator, that is disposed on the axis of the APU, upstream of the compressor, can provide many advantages.

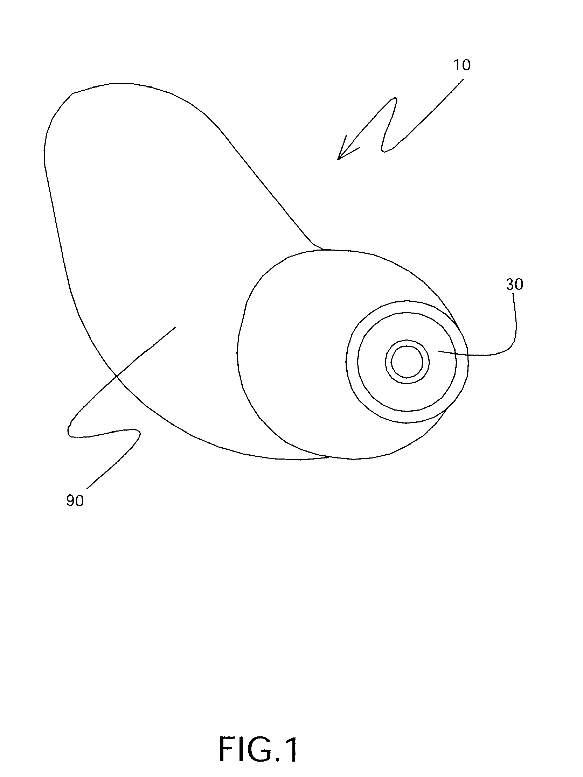

One such inlet flow redirector is illustrated and described herein. A perspective view of such a flow redirector 10 is shown in Figure 1 and will be discussed below.

One embodiment of a flow redirector as described herein is illustrated in Figures 1-4. These Figures illustrate perspective, side, top and rear views of an exemplary flow redirector 10. The redirector 10 comprises an inlet 20, disposed on the upstream end. The inlet is in fluid communication with at least one source of airflow (not illustrated) that enters into the redirector. An outlet 30 is located on the downstream end of the redirector 10 and is in fluid communication with the compressor or another element of an APU (not illustrated). An internal flow path 50 joins the inlet 20 and the outlet 30 and provides a passage for the flow of air or other fluid to pass from the inlet to the outlet. The internal flow path is broken generally into two portions: a transition region 52, and a nozzle region 54.

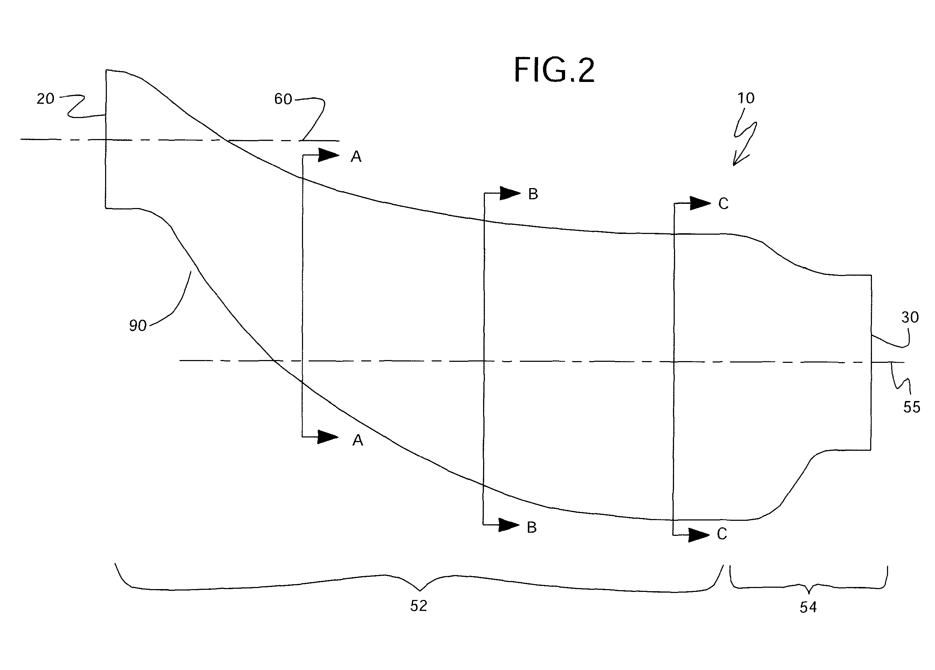

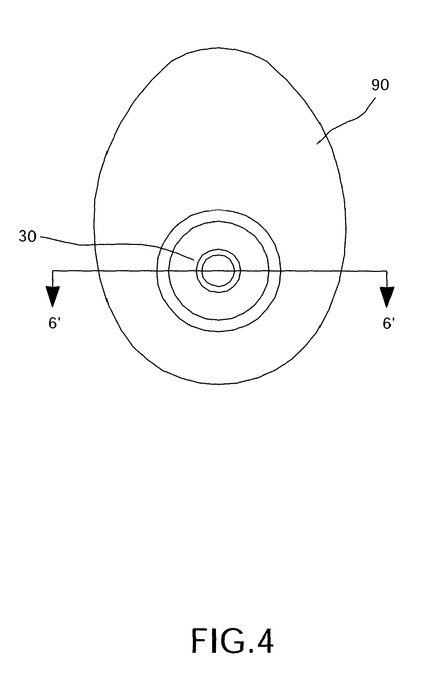

As can be seen most clearly in Figure 2, the inlet 20 is located off of the main axis 55 of the flow redirector 10. In particular, the inlet 20 has a generally circular cross-section having a central axis 60. However, the outlet 30 has an annular shape (see Figure 4) and is disposed around a different axis 55, which is generally the same axis about which the compressor rotates. The axis 55 of the outlet will also be referred to as the "main axis".

In the illustrated embodiment, the axis 60 of the inlet 20 is located transversely above the axis of the outlet 30. This offset allows for a flow of air or other fluid that is being received from a source off of the main axis 55 to be delivered to a source on the axis 55. The transition region 52 is used to redirect the flow of air from a circular cross-section into an annular cross-section, and also to relocate the flow from axis 60 to axis 55. The nozzle region 54 is then used to continue to converge the flow into the appropriate size annulus for flow into the compressor. In one embodiment, the transition region 52 is modeled using arc and semicircle profiles where the profile angles can be specified using constants or a variety of interpolation schemes.

Although the use of circular inlets to feed annular devices has been used in the art before, most applications have used inlets that were co-axially located with the annular outlet. For example, in a traditional nacelle mounted jet engine, the inlet at the front of the engine has a generally circular cross-section, and the compressor receives an annular flow of air. This is achieved in such circumstances with a simple conical hub extending forward from the front of the compressor that transforms the circular cross-section into an annulus. However, when as discussed above, the source flow is not disposed on the main axis 55, such simple techniques cannot be used.

Another feature of the present system is that the output from the flow redirector 10 should produce a flow that includes as little net swirl as possible. "Net swirl" refers to the amount of circumferential momentum present in the flow, as compared to the axial momentum of the flow. In particular, net swirl can have a significant effect upon the efficiency of the compressor (or other downstream devices), because the swirl present in the flow can alter the angle at which the flow effectively meets the blades of the compressor.

For example, in a typical, prior art tangential injection device to convert pipe-flow to annular flow, such as the inlet to a turbocharger, there is a very high degree of swirl in the flow. While swirl can be desirable in such a device that uses tangential injection, it can be a disadvantage when attempting to operate a compressor designed to receive axial flow. Therefore, it is desirable that the amount of net swirl be minimized in the instant flow redirector 10.

In addition to minimizing the amount of net swirl present in the flow at the outlet 30 of the flow redirector 10, it is also desirable that the flow be as symmetric as possible around the circumference of the outlet 30. For similar reasons to those discussed above, circumferential variation in the character of the flow will tend to cause variations in the flow as seen by the compressor downstream of the outlet 30. For example, outlet tangential swirl affects compressor incidence angles and, if non-axisymmetric, can cause undesirable unsteady aerodynamic forcing on the compressor. As noted above, while volutes and tangential-injection systems may present a consistent flow to the compressor, they do so at the expense of very high net swir1, which is undesirable for many applications and is not appropriate for use with compressors designed for axial flow input.

As with most devices designed to channel the flow through any system, it is desirable that there is relatively little pressure drop in the flow that passes through the flow redirector in the normal direction, less than 1% for APU applications. This is especially important for applications where the compressor is operating near the stall limit, as is often the case for APUs operating at high altitudes or low pressures. Compressor stall can also be caused by high net swirl in the flow. In addition to a low overall pressure drop across the device, it is also desirable that the overall length of the flow redirector be as small as possible in order to allow it to be constructed with less material, and to take as little space as possible.

One feature that can be used to help achieve these goals is to use a flow redirector 10 that has a cross-section that is converging at all axial locations along its length. Because it is desirable to have a system with the smallest possible size, and particularly, the smallest possible axial length, the input flow is generally disposed adjacent to the mechanical device on the axis 55. This small axial length also is enhanced by not using a system involving a plenum; plenum designs expand the flow prior to contracting it, and this additional expansion adds to the axial length.

The small axial length is achieved by using a strong curvature in the transition region. Such strong curvature can cause flow separation that creates non-uniform exit flow conditions and high pressure gradients. By having a continually converging cross-sectional area, flow separation is inhibited.

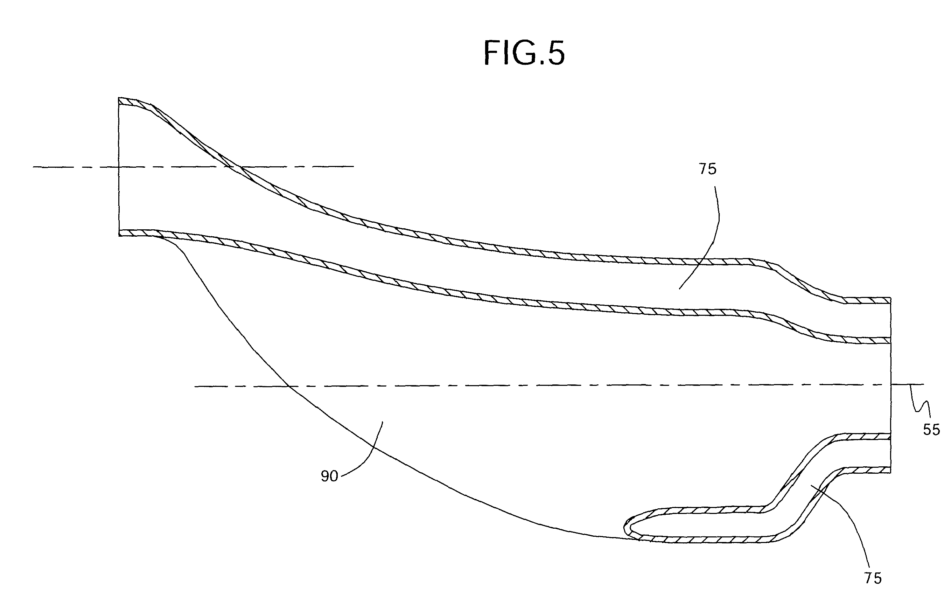

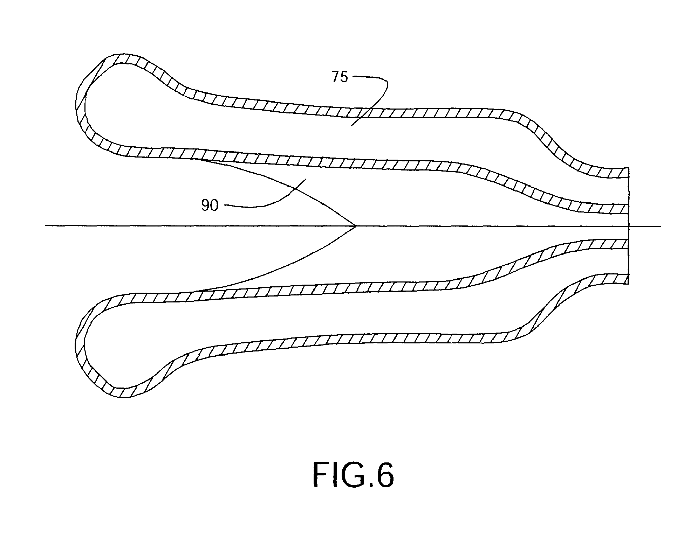

As noted above, the flow redirector 10 is used to provide a transition from flow along an axis 60 parallel to the main axis 55 of the compressor to annularly shaped axial flow suitable for a compressor. As can be seen most clearly in the cutaway views of Figures 5 and 6, the general operation of the flow redirector 10 is to provide a flow path where the circular cross-section of incoming flow from the inlet 20 is directed downward, toward the main axis 55 of the system, making the flow path wider laterally, but flatter transversely.

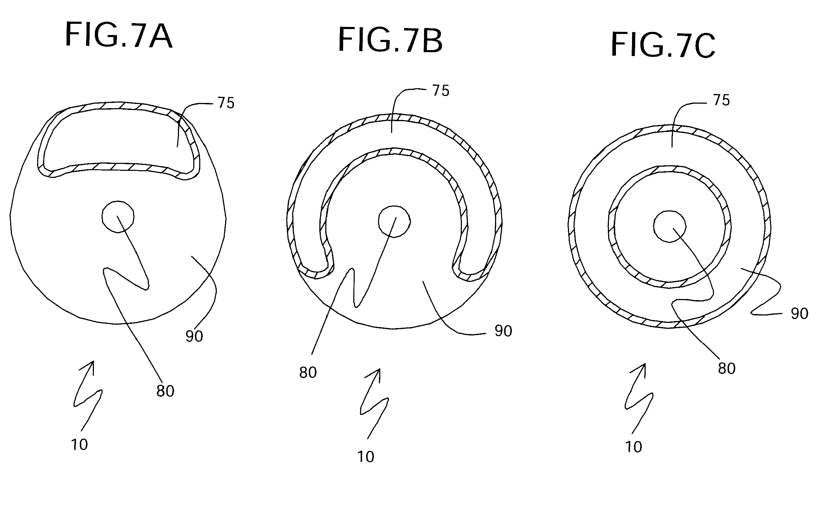

As the flow moves in the axial direction, the lateral portions of the cross-section are extended circumferentially to each side around the main axis 55, until they meet each other on the opposite side of the main axis 55 than the side that the axis 60 of the inlet 20 is located. This can be seen by examining Figures 7A, 7B and 7C, which show cross sections taken of the exemplary flow redirector at the locations indicated in Figure 2 by section lines A-A, B-B, and C-C, respectively.

As can be seen in Figure 7A (which shows a view looking downstream along the main axis 55), the cross-section of internal passage 50 of the flow redirector 10 has a generally flattened and rounded shape at section line A-A (shown on Figure 2). At this point, the lateral edges of the cross-section have only a slight deflection along the circumference of the flow redirector. The inner surface 75 of the flow redirector 10 can be seen in this Figure as well. The inner surface 75 defines the shape of the flow passage 50 of the redirector. In this view, the outer surface 90 of the flow redirector is also visible, as is the opening 80 that is in the center of the annulus of outlet 30, located at the downstream end of the redirector.

The opening 80 in the center of the annulus can accommodate a shaft or other mechanical connection between the compressor or other rotating components located downstream of the flow redirector 10, and the mechanical device, such as an electrical motor or generator, located on the axis upstream of the compressor, and generally inside the cavity formed within the outer surface 90 of the redirector. Such an arrangement allows, as mentioned above, for the connection of devices without the need to connect to the device using a belt, gears, or other devices designed to connect to an edge of a rotating component. Such an arrangement also provides access to any mechanical or electrical device disposed in the cavity within the flow redirector 10.

Figure 7B shows a cut-away view taken along a cross-section perpendicular to the main axis 55 at a location shown by section line B-B of Figure 2, which is further downstream along the flow redirector 10 than that of Figure 7A. It can be seen that the cross-section of the internal passage of the transition region 52 in Figure 7B has begun to extend significantly around the circumference of the redirector, but has still not surrounded the central opening 80 of the annulus of the outlet 30. Although the cross-sectional shape has extended further along the axis, it is desirable that the overall size of the cross-section at this location is smaller than the size of the cross-section shown in Figure 7A. By making the cross-section smaller at each successively downstream axial location, a flow path that is converging at all cross-sections can be provided. As discussed above, this can help to limit flow states that can lead to undesirable flow behavior.

Figure 7C shows a cut-away view taken at section line C-C on Figure 2, showing the cross-section of the internal passage 50 once the lateral portions of the cross-section have extended all the way around the central axis to meet each other at the bottom of the redirector 10. By this axial location, the annular shape of the passage 50 has been achieved. Note also that the size of the cross-section of the flow passage 50 at this point is still smaller than that at section line B-B, continuing to cause the flow through the passage to converge.

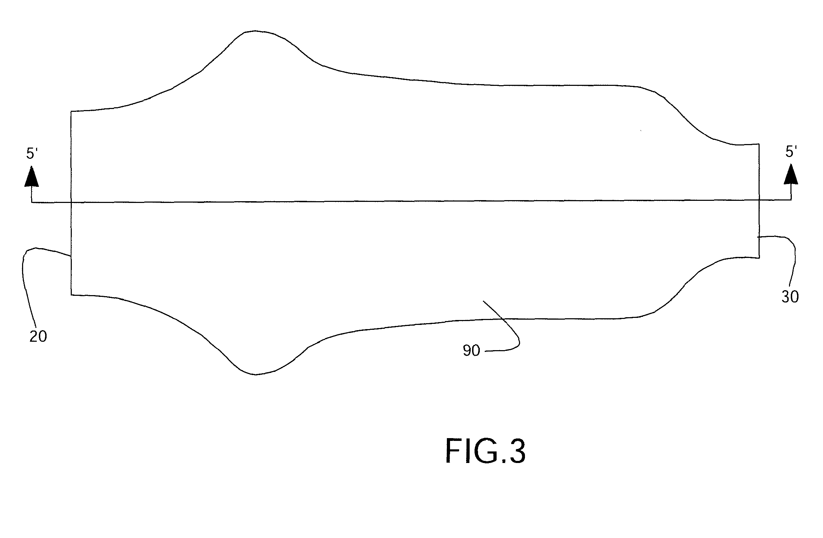

As can be seen from the cross-sections in Figures 7A, 7B and 7C, as well as from the top views shown in Figures 3 and 6, the flow redirector 10 has a laterally symmetric shape along its entire length. By maintaining this symmetry, the net swirl introduced into the flow can be minimized. While individual regions having swirl may occur at various points along the axial length of the flow redirector, the symmetrical nature of the redirector helps to maintain generally symmetric flow patterns, such that the flow at the outlet 30 does not contain a net swirl in either direction around the axis 55. Symmetry also helps provide uniform pressure and mass flow across the radius and around the circumference of the area of the outlet 30.

While it will be understood that perfectly symmetrical flow having zero net swirl may not be achieved under all operating conditions, the symmetric design is configured to not introduce any net swirl into the flow through the internal passage 50. In particular, the symmetric lateral extension of the flow path in both directions around the circumference of the redirector is different from the techniques used in volutes and other systems where annular flow is achieved by extending the cross-section in one circumferential direction only, or by wrapping the flow around the axis 55. While such volutes may achieve an annular flow path, they also introduce a high degree of tangential velocity in one direction, which creates a significant net swirl and also results in a less uniform pressure and mass flow distribution at the outlet 30, and a greater overall pressure drop.

As discussed above, the transition region 52 is used to reshape the flow into an annular cross-section (as can be seen in Figure 7C). Aft of this point, the nozzle region 54 of the flow redirector 10 continues to converge the flow into the appropriate radial dimensions for the flow to pass into the compressor. Although the flow should continue to be converging within the nozzle region 54, the inner and outer radii of the annulus need not be altered by the same amount or following the same profile.

For example, in one embodiment the cross-sectional area at the end of the transition region 52 is 80% of the area of the inlet 20, leaving approximately a two to one convergence for the nozzle region 54. If convergence in the nozzle region is insufficient, aggressive turning can cause flow separation and thick boundary layers that undermine compressor performance. These values can vary based on the degree of overall convergence desired for the flow redirector.

Inserts can be used in the rearward portion of the transition region 52 to help to align the separate lateral flows on the left and right transverse sides and to turn the flow toward a more axial direction. While such inserts or vanes are not required, embodiments using these inserts can assist in making the velocity vectors parallel when these flows meet.

The flow redirector system described herein may also incorporate a device to allow flow from one of multiple sources to enter the redirector. Such embodiments act as flow selectors, as well as flow redirectors. Such flow selectors can be of benefit when there is a need to operate the compressor or other downstream systems from different flow sources under different operating conditions.

For example, in an exemplary application where the flow redirector is connected to the compressor of an APU on a jet aircraft, the flow redirector could be configured to select between flows from one source at ambient conditions, and another source at a higher pressure. For instance, in one embodiment the higher pressure source could be the compressor discharge from one or more of the main propulsive engines of the aircraft. In another embodiment, air can be taken from the pressurized cabin of a passenger aircraft to feed to the compressor. Those of skill in the art will recognize that a variety of high-pressure sources for either land-based or airborne power generation and pressurization systems can be used without altering the fundamental nature of the systems and techniques described.

Such an arrangement may be of use when it is desirable to select one of these two sources to use as input flow into the compressor fed by the flow redirector, and both of these sources are available via pipes located off of the main axis 55 of the compressor or other downstream component. A valve can be located in the inlet portion of the flow redirector that allows for the incoming flow to the redirector to be taken from either one source or the other.

In another embodiment, the inlet portion of the flow redirector may include two valves, one for each source. In order to maintain flow being taken from a single source at a time, it may be desirable to operate the system so that exactly one of the two flow valves is open at any given time.

In general, it will be desirable to operate the valve in such a way that flow is only received from one of the two sources at any given time, rather than flow being received from both sources simultaneously. In particular, during operation, the selection of which source to use will generally be dependent upon the operating condition of the system, and specifically, whether or not there is a need for the flow from the higher pressure source.

For instance, for an APU operating on an aircraft at high altitude, the ambient pressure is lower than would be available from the pressurized source. Operating the APU on the ambient pressure source would cause a loss in the amount of power that the APU can generate. By operating the valve so as to select the input source that provides higher-pressure input flow, more power can be generated by the APU. Selecting the appropriate input source to allow the system to provide the desired exit flow conditions from the compressor, and thereby to provide the desired level of power.

The various embodiments of flow redirector for use with a compressor inlet described above thus provide a way to redirect the incoming flow into a compressor from an off-axis flow into an annular flow around the compressor axis. These techniques and systems can also provide a flow into the compressor with a low net swirl and a high degree of pressure and mass flow uniformity at the exit of the flow redirector. Such systems can also be effective when more than one source is to be connected to the compressor, each of which is located off of the axis of the compressor.

Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Furthermore, the skilled artisan will recognize the interchangeability of various features from different embodiments. For example, source selection apparatus and techniques described with respect to one embodiment can be adapted for use with various flow redirectors as described with respect to other embodiments. For instance, it may be desirable in some embodiments to use the flow redirector described herein to feed annular axial flow to components other than compressors. Similarly, the various features described, as well as other known equivalents for each feature, can be mixed and matched by one of ordinary skill in this art to construct flow redirectors in accordance with principles of this disclosure.

Although the systems herein have been disclosed in the context of certain preferred embodiments and examples, it will be understood by those skilled in the art that the invention extends beyond the specifically disclosed embodiments to other alternative embodiments and/or uses of the systems and techniques herein and obvious modifications and equivalents thereof. Thus, it is intended that the scope of the invention disclosed should not be limited by the particular disclosed embodiments described above, but should be determined only by a fair reading of the claims that follow.

## Claims

1. A flow redirector (10) configured to channel a fluid flow from an upstream source to a downstream location, the downstream location having an annular cross section disposed about a central axis (55) and the upstream source being disposed off of the central axis (55), the redirector comprising:
an inlet (20) in flow communication with the upstream source and coupled to the upstream source;
a transition region (52) in flow communication with the inlet (20), the transition region (52) having a laterally symmetrical shape and having a cross section taken normal to the central axis (55), such that the area of the cross section at any given point along the central axis (55) is smaller than the area of the cross section at any point along the central axis (55) disposed upstream of the given point;
an outlet (30) in flow communication with the transition region (52) and the downstream location.

2. A flow redirector (10) as in Claim 1 wherein the outlet (30) has an annular cross-section.

3. A flow redirector (10) as in Claim 1 or Claim 2, wherein a component is disposed upon the central axis (55) upstream of the outlet (30).

4. A flow redirector (10) as in any one of the preceding Claims wherein the component is not within the fluid flow through the redirector (10).

5. A flow redirector (10) as in any one of the preceding Claims wherein the outlet (30) is in fluid communication with a compressor.

6. A flow redirector (10) as in any one of the preceding Claims wherein the flow into the inlet (20) from the upstream source moves in a direction substantially parallel to the central axis (55).

7. A flow redirector (10) as in any one of the preceding Claims wherein the flow out of the outlet (30) flows in a direction substantially parallel to the central axis (55).

8. A flow redirector (10) as in any one of the preceding Claims further comprising a second upstream source and a selector disposed in flow communication the inlet (20) and having a first condition and a second condition such that in the first condition the selector is in flow communication with the upstream source, and in the second condition the selector is in flow communication with the second upstream source.

9. A flow redirector (10) as in any one of the preceding Claims further comprising a nozzle region (54) in flow communication with the downstream end of the transition region (52) and the outlet (30) of the flow redirector (10).

10. A flow redirector (10) as in any one of the preceding Claims wherein the nozzle region (54) has a cross section taken normal to the central axis (55), such that the area of the cross section at any given point along the central axis (55) is smaller than the area of the cross section at any point along the central axis (55) disposed upstream of the given point.
